# EUROPEAN PATENT SPECIFICATION

(11) **EP 2 261 510 B1**
(45) Date of publication and mention of the grant of the patent: **04.07.2012**
(21) Application number: 10154347.8
(22) Date of filing: 23.02.2010
(51) Int. Cl.: F04D 29/22, B23H 9/10

(54) **Method of manufacturing impeller of centrifugal rotary machine.**
Verfahren zur Herstellung eines Laufrades einer zentrifugalen Rotationsmaschine.
Procédé de fabrication d'une turbine pour machine rotative centrifuge.

(30) Priority: 10.06.2009 JP 2009139465
(43) Date of publication of application: 15.12.2010
(73) Proprietor: Mitsubishi Heavy Industries, Ltd., Tokyo 108-8215 (JP); Hoden Seimitsu Kako Kenkyusho Co., Ltd., Kanagawa-ken (JP)
(72) Inventor: Khanhson, Pham, Hiroshima-shi, Hiroshima-ken (JP); Yasui, Toyoaki, Hiroshima-shi, Hiroshima-ken (JP); Tasaki, Akinori, Hiroshima-shi, Hiroshima-ken (JP); Tanaka, Eizaburo, Kanagawa-ken (JP); Maehara, Takashi, Kanagawa-ken (JP)
(74) Representative: HOFFMANN EITLE

(56) References cited:
- EP-A1- 1 211 009
- EP-A1- 1 396 309
- DE-A1- 2 616 308
- US-A- 2 962 941
- US-A- 3 041 442

## Description

### BACKGROUND OF THE INVENTION

### [Field of the Invention]

The present invention relates to a method of manufacturing an impeller used in a centrifugal rotary machine such as a centrifugal compressor, and an impeller of a centrifugal rotary machine.

### Description of the Related Art

Generally, an impeller of a centrifugal compressor includes a hub which is mounted to a rotary shaft, a shroud which is disposed outward so as to be distant from the hub, and plural blades which connect the hub to the shroud.

In this kind of impeller, a portion surrounded by a side surface of each blade, a stream surface of the hub, and a stream surface of the shroud is formed as a passageway for compressing air. The passageway has a complex shape in which the passageway is opened from the inner peripheral side in the axial direction, is gradually curved as it goes to the outer peripheral side in the radial direction, and is opened from the outer peripheral side toward the radial direction. For this reason, generally, this kind of impeller is manufactured in such a manner that the blade and the shroud are fixed to a disk-shaped body portion integrally formed with the hub through fillet welding or groove welding.

However, in a fixing operation using such welding, a defect is easily generated and a high-temperature portion is locally generated during the welding. For this reason, a problem arises in that the impeller is easily deformed.

Therefore, as a countermeasure to the method of manufacturing the impeller using welding, for example, JP-A-2002-235694 (hereinafter, Patent Document 1) proposes a manufacturing method using electrical discharge machining. The manufacturing method using electrical discharge machining disclosed in Patent Document 1 relates to a rotor for a centrifugal compressor. That is, a passageway is formed in a disk from the outer peripheral side of the disk by means of electro erosion using an electrode having substantially the same shape as that of a circular-arc cavity of the passageway.

However, as described above, the passageway of the impeller has a shape in which the passageway is opened from the inner peripheral side toward the axial direction, is opened from the outer peripheral side toward the radial direction, and is curved between the inner peripheral side and the outer peripheral side. For this reason, as in the processing method disclosed in Patent Document 1, even when it is desirable for the inner portion to be processed just by inserting the electrode as a processing tool from the opening, a problem arises in that it is difficult to highly precisely process the curved portion, and particularly, the inner portion of the curved portion.

Further, a centrifugal compressor rotor, which comprises a hub with integral vanes closely approaching radial fairing over a majority of their length, and a method of producing the rotor are disclosed in US 2962941 which discloses in combination the features of the the preamble of claim 1.

### SUMMARY OF THE INVENTION

The present invention is contrived in consideration of the above-described circumstances, and an object of the present invention is to provide a method of manufacturing an impeller of a centrifugal rotary machine and an impeller of a centrifugal rotary machine capable of easily forming a passageway with high precision.

In order to achieve the above-described object, the present invention proposes the following configuration.

According to an aspect of the present invention, there is provided a method of manufacturing an impeller of a centrifugal rotary machine, the impeller being formed in a substantially disk shape and including a passageway, which is formed between a body portion, a shroud, and adjacent blades and is curved to follow the axial direction in an inner peripheral side of the impeller and to follow the radial direction toward an outer peripheral side thereof, the method including: a first passageway forming step of setting a rotation center at a position between a curvature center of part of an outer stream surface forming the outer portion of a curved portion and a curvature center of part of an inner stream surface forming the inner portion of the curved portion on one side of the axial direction where a curvature center of the passageway is located relative to a disk forming an external shape of the impeller, and rotating a processing tool about the rotation center relative to the disk so as to form at least a part of the passageway from a position which is an inner peripheral end of the passageway of the disk toward the outer peripheral side.

According to this method, the rotation center is set at a position on one side of the axial direction where the curvature center of the passageway is located relative to the disk, and the processing tool is rotated about the rotation center relative to the disk. Accordingly, the processing tool is moved relative to the disk while having a curve locus following the radial direction as it goes from a position which is the inner peripheral end of the passageway in the disk toward the outer peripheral side. For this reason, it is possible to easily and highly precisely form the passageway following the axial direction in the inner peripheral side and curved to follow the radial direction as it goes to the outer peripheral side, and particularly, the inner portion of the curved portion in accordance with the curvature radius determined by the relative position between the disk and the set rotation center.

In the method according to the aspect of the present invention, in the first passageway forming step, the passageway may be formed in the disk by rotating the processing tool about the rotation center relative to the disk and relatively moving the rotation center and the disk in the circumferential direction of the disk.

According to this method, since the passageway is formed in the disk by rotating the processing tool about the rotation center relative to the disk and relatively moving the rotation center and the disk in the circumferential direction of the disk, it is possible to relatively move the processing tool in the circumferential direction while moving the processing tool from the inner peripheral side to the outer peripheral side of the disk upon forming the passageway. Accordingly, it is possible to easily and highly precisely form the passageway, curved in the circumferential direction as it goes from the inner peripheral side of the disk to the outer peripheral side, in the disk.

In the method according to the aspect of the present invention, in the first passageway forming step, the processing tool may be rotated about the rotation center relative to the disk by changing a position of the rotation center in accordance with a rotation angle about the rotation center.

According to this method, since the processing tool is rotated about the rotation center relative to the disk by changing a position of the rotation center in accordance with a rotation angle about the rotation center, it is possible to easily and highly precisely form the passageway formed in a curved shape having plural curvatures.

The method according to the aspect of the present invention may further include a second passageway forming step of forming an outer peripheral end of the passageway from the outer peripheral side of the disk.

According to this method, since both the first passageway forming step and the second passageway forming step are provided, only the inner peripheral end of the passageway may be formed in the first passageway forming step, and only the outer peripheral end of the passageway may be formed in the second passageway forming step. Accordingly, it is possible to make the processing length in each passageway forming step to be short. For this reason, it is possible to more easily form the passageway in each passageway forming step, and to more highly precisely form the entire passageway.

In the method according to the aspect of the present invention, an electrode having a shape corresponding to a shape of the inner peripheral end of the passageway may be used as the processing tool, and the electrode may be inserted from the inner peripheral end of the passageway through electrical discharge machining.

According to this method, since the first passageway forming step is performed by inserting the electrode from the inner peripheral end of the passageway through electrical discharge machining, it is possible to more highly precisely form the passageway.

According to another aspect of the present invention, which is not presently claimed, there is provided a substantially disk-shaped impeller of a centrifugal rotary machine, including: a passageway which is curved to follow the axial direction in an inner peripheral side of the impeller and to follow the radial direction toward an outer peripheral side thereof, wherein the passageway is curved to follow the radial direction as it goes from the inner peripheral end to the outer peripheral side.

With this configuration, the passageway is curved from the inner peripheral end toward the outer peripheral side, and the inner peripheral end is not provided with a linear portion. For this reason, it is possible to easily process the passageway in such a manner that the rotation center is set at a position on one side of the axial direction where the curvature center of the passageway relative to the disk as the base material of the impeller is located, the processing tool is rotated about the rotation center relative to the disk, and then the processing tool is just inserted from a position which is the inner peripheral end of the passageway. In addition, it is possible to highly precisely form the passageway in accordance with the curvature radius determined by the relative position between the disk and the rotation center set at this time.

According to the aspect of the present invention, it is possible to easily and highly precisely form the passageway of the impeller through the first passageway forming step.

### BRIEF DESCRIPTION OF THE DRAWINGS

FIG. 1 is a plan view of an impeller according to a first embodiment of the present invention.
FIG. 2 is a sectional view taken along the line A-A in FIG 1.
FIG. 3 is a flowchart showing a process of manufacturing the impeller shown in FIG. 1.
FIG. 4 is a perspective view of a disk used to illustrate an external shape forming step in the process of manufacturing the impeller according to the flowchart shown in FIG. 3.
FIG. 5 is a longitudinal sectional view of the disk used to illustrate the external shape forming step in the process of manufacturing the impeller according to the flowchart shown in FIG. 3.
FIG. 6 is a perspective view of a base material used to illustrate the external shape forming step in the process of manufacturing the impeller according to the flowchart shown in FIG. 3.
FIG. 7 is a partially cut away plan view of the disk used to illustrate an outer peripheral side passageway forming step in the process of manufacturing the impeller according to the flowchart shown in FIG. 3.
FIG. 8 is a partially cut away plan view of the disk used to illustrate the outer peripheral side passageway forming step in the process of manufacturing the impeller according to the flowchart shown in FIG. 3.
FIG. 9 is a partially cut away plan view of the disk used to illustrate the outer peripheral side passageway forming step in the process of manufacturing the impeller according to the flowchart shown in FIG. 3.
FIG. 10 is a longitudinal sectional view of the disk used to illustrate the outer peripheral side passageway forming step in the process of manufacturing the impeller according to the flowchart shown in FIG. 3.
FIG. 11 is a longitudinal sectional view of the disk used to illustrate the outer peripheral side passageway forming step in the process of manufacturing the impeller according to the flowchart shown in FIG 3.
FIG. 12 is a longitudinal sectional view of the disk used to illustrate the outer peripheral side passageway forming step in the process of manufacturing the impeller according to the flowchart shown in FIG. 3.
FIG. 13 is a partially cut away plan view of the disk used to illustrate the outer peripheral side passageway forming step in the process of manufacturing the impeller according to the flowchart shown in FIG. 3.
FIG. 14 is a longitudinal sectional view of the disk used to illustrate the outer peripheral side passageway forming step in the process of manufacturing the impeller according to the flowchart shown in FIG. 3.
FIG 15 is a longitudinal sectional view of the disk used to illustrate an inner peripheral side passageway forming step in the process of manufacturing the impeller according to the flowchart shown in FIG 3.
FIG. 16 is a longitudinal sectional view of the disk used to illustrate the inner peripheral side passageway forming step in the process of manufacturing the impeller according to the flowchart shown in FIG 3.
FIG. 17 is a longitudinal sectional view of the disk used to illustrate the inner peripheral side passageway forming step in the process of manufacturing the impeller according to the flowchart shown in FIG. 3.
FIG 18 is a partially cut away plan view of the disk used to illustrate the inner peripheral side passageway forming step in the process of manufacturing the impeller according to the flowchart shown in FIG 3.
FIG. 19 is a partially enlarged view of an X portion shown in FIG 18, and is a view illustrating the inner peripheral side passageway forming step in the process of manufacturing the impeller according to the flowchart shown in FIG 3.
FIG 20 is a partially enlarged view of an X portion shown in FIG 18, and is a view illustrating the inner peripheral side passageway forming step in the process of manufacturing the impeller according to the flowchart shown in FIG. 3.
FIG. 21 is a longitudinal sectional view of the disk used to illustrate the inner peripheral side passageway forming step in the process of manufacturing the impeller according to the flowchart shown in FIG 3.
FIG. 22 is a partially cut away plan view of the disk used to illustrate an acid cleaning treatment step in the process of manufacturing the impeller according to the flowchart shown in FIG. 3.
FIG. 23 is a longitudinal sectional view of the disk used to illustrate the acid cleaning treatment step in the process of manufacturing the impeller according to the flowchart shown in FIG. 3.
FIG. 24 is a longitudinal sectional view of the impeller according to a second embodiment of the present invention.
FIG. 25 is a partially enlarged longitudinal sectional view of the disk used to illustrate the inner peripheral side passageway forming step in the process of manufacturing the impeller shown in FIG. 24.

### DETAILED DESCRIPTION OF THE INVENTION

### [First Embodiment]

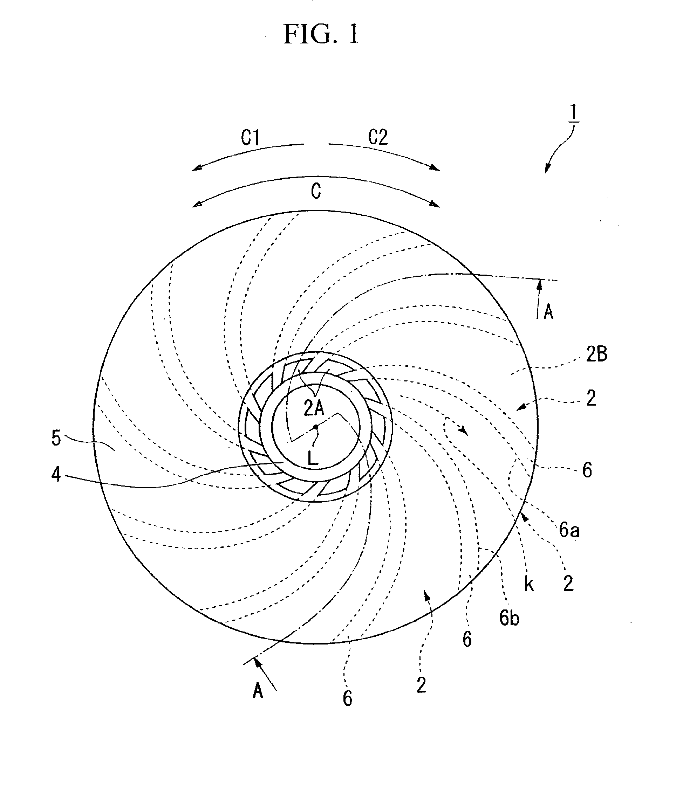

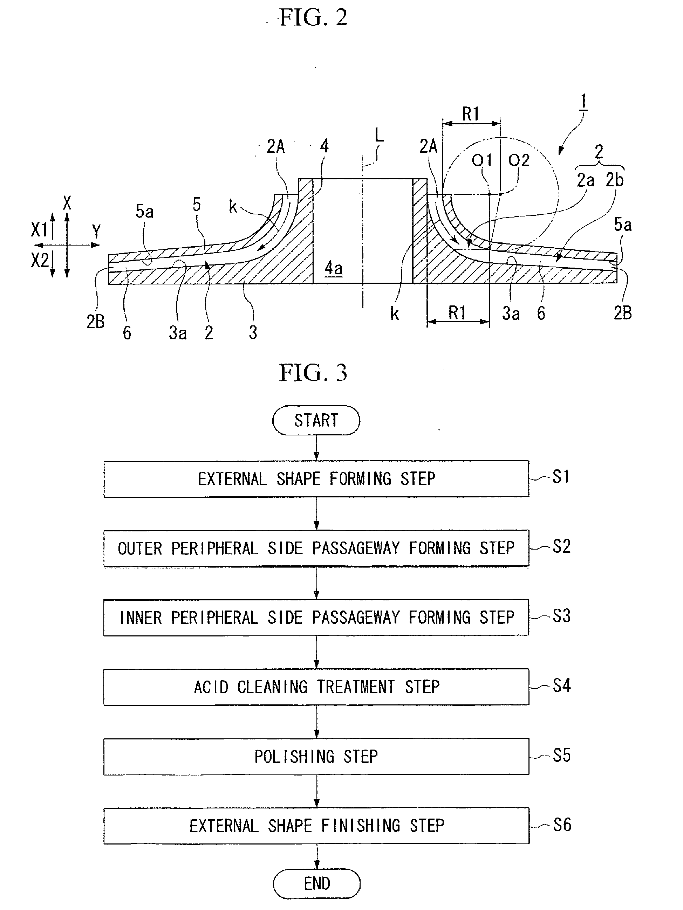

Hereinafter, an impeller of a centrifugal compressor (centrifugal rotary machine) according to a first embodiment of the present invention will be described with reference to FIGS. 1 and 2.

As shown in FIGS. 1 and 2, an impeller 1 is formed in a substantially disk shape, and includes passageways 2 so as to have a radial shape which follow the central axis direction L (hereinafter, referred to as the axial direction X) in the inner peripheral side thereof and are curved in the radial direction Y and the circumferential direction C as it goes to the outer peripheral side thereof.

In addition, in the following description, the outer peripheral side of the impeller 1 in the radial direction Y is simply referred to as the outer peripheral side, and the inner peripheral side of the impeller 1 in the radial direction Y is simply referred to as the inner peripheral side.

In detail, the impeller 1 includes a substantially disk-shaped body portion 3, a substantially cylindrical hub 4 which protrudes from the center portion of the body portion 3 toward one side X1 of the axial direction X, a shroud 5 which is distant from the body portion 3 toward one side X1 of the axial direction X, and plural blades 6 which are radially disposed on the body portion 3 from the hub 4 and connect the body portion 3 to the shroud 5.

As shown in FIG. 2, a front surface as a surface on one side X1 of the axial direction X of the body portion 3 is formed such that the outer peripheral side is substantially formed in a plane. Also, the front surface is curved so as to protrude toward one side X1 of the axial direction X as it goes from the outer peripheral side to the inner peripheral side, and is continuous to the outer peripheral surface of the hub 4 in the inner peripheral side. In addition, a rear surface as a surface on the other side X2 in the axial direction X of the body portion 3 is substantially formed in a plane, and a perforation hole 4a of the hub 4 is opened at the center position of the body portion 3.

In addition, the shroud 5 is substantially formed in an annular shape, and is formed so as to be substantially parallel to the front surface of the body portion 3. That is, the shroud 5 is curved so as to gradually protrude toward one side X1 of the axial direction X as it goes from the outer peripheral side to the inner peripheral side, and a gap is formed between the outer peripheral surface of the hub 4 and the shroud 5 on the inner peripheral side.

Each of the blades 6 is substantially formed in a plate shape, and is gradually curved toward one side X1 of the axial direction X so as to follow the front surface of the body portion 3 as it goes to the inner peripheral side. In addition, as shown in FIG. 1, each of the blades 6 is formed in a curved shape which is curved toward one side C1 in the circumferential direction C as it goes from the inner peripheral side to the outer peripheral side.

In addition, as shown in FIGS. 1 and 2, in the impeller 1, the passageway 2 is formed between the body portion 3, the shroud 5, and the adjacent blades 6. In other words, the passageway 2 is formed by an outer stream surface 3a which is formed by the front surface of the body portion 3, an inner stream surface 5a which is formed by the rear surface as the surface on the other side X2 in the axial direction X of the shroud 5, and a space which is surrounded by a first curved surface 6a formed by a surface on the other side C2 in the circumferential direction C of one blade 6 and a second curved surface 6b formed by a surface on one side C1 in the circumferential direction C of the other blade 6 in the adjacent blades 6.

For this reason, as shown in FIG 2, according to the shapes of the body portion 3, the hub 4, the shroud 5, and the blade 6, the passageway 2 includes as curved portion 2a which is opened from an inner peripheral end 2A toward one side X1 of the axial direction X between the hub 4 and the inner edge of the shroud 5 and to be gradually curved toward the outer peripheral side in the radial direction Y, and a linear portion 2b which is continuous from the curved portion 2a and is substantially formed along the radial direction Y so as to be opened from an outer peripheral end 2B on the outer peripheral side in the radial direction Y.

In the present embodiment, a part of the outer stream surface 3a forming the outer portion of the curved portion 2a of each passageway 2 is formed as a curved surface which has a predetermined curvature radius R1 about a curvature center O1 set at a position on one side X1 of the axial direction X of the impeller 1. In the same manner, a part of the inner stream surface 5a forming the inner portion of the curved portion 2a is formed as a curved surface which has a predetermined curvature radius R1 about a curvature center 02 set at a position one side X1 of the axial direction X of the impeller 1.

In the present embodiment, the positions of the curvature centers O1 and O2 are set to be different from each other. Accordingly, a gap of the curved portion 2a between the outer stream surface 3a and the inner stream surface 5a is set to be gradually narrowed as it goes from the inner peripheral end 2A to the outer peripheral side. In addition, the gap of the curved portion 2a may not be set to be gradually narrowed as it goes from the inner peripheral end 2A to the outer peripheral side.

In the present embodiment, as shown in FIG. 1, since the blades 6 are disposed in a radial shape, a gap of the passageway 2 in the circumferential direction C is set to be gradually widened as it goes from the inner peripheral side to the outer peripheral side.

In addition, the impeller 1 is formed from, for example, stainless steel such as SUS410 or SUS630, or SNCM steel (nickel-chromium-molybdenum steel) in JIS standard.

In the above-described impeller 1, when a rotary shaft (not shown) attached to the hub 4 is rotationally driven in one side C1 in the circumferential direction C, as shown in FIG 2, a steam of air k is generated inside the passageway 2 so as to face from the inner peripheral side to the outer peripheral side, and the air k is accelerated by a centrifugal force generated by the rotation. Accordingly, the air k sucked from the inner peripheral end 2A of the passageway 2 is compressed inside the passageway 2, and is discharged to the outer peripheral end 2B. Subsequently, for example, the air k is sent to an external device (not shown) connected to the downstream side of the centrifugal compressor.

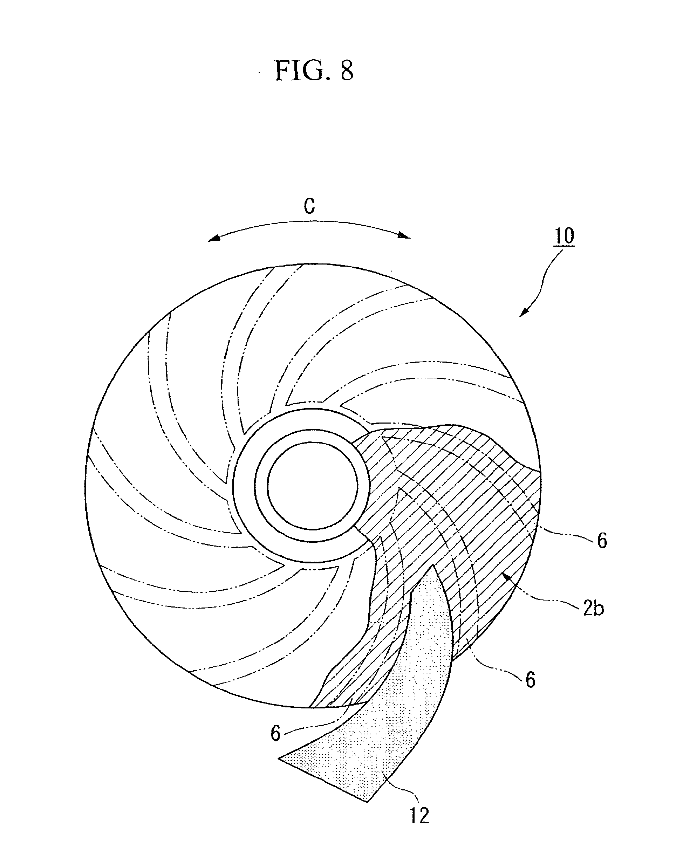

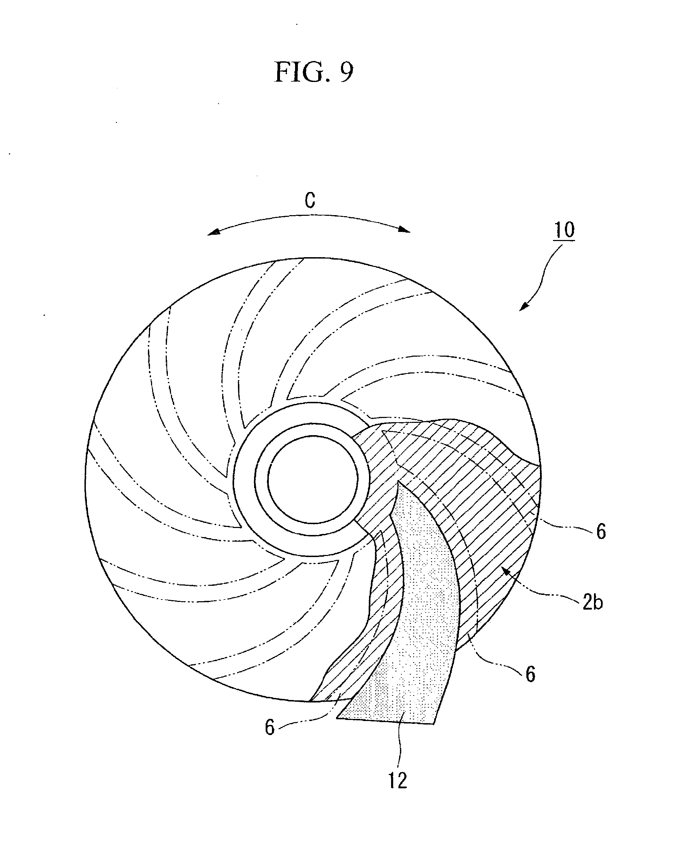

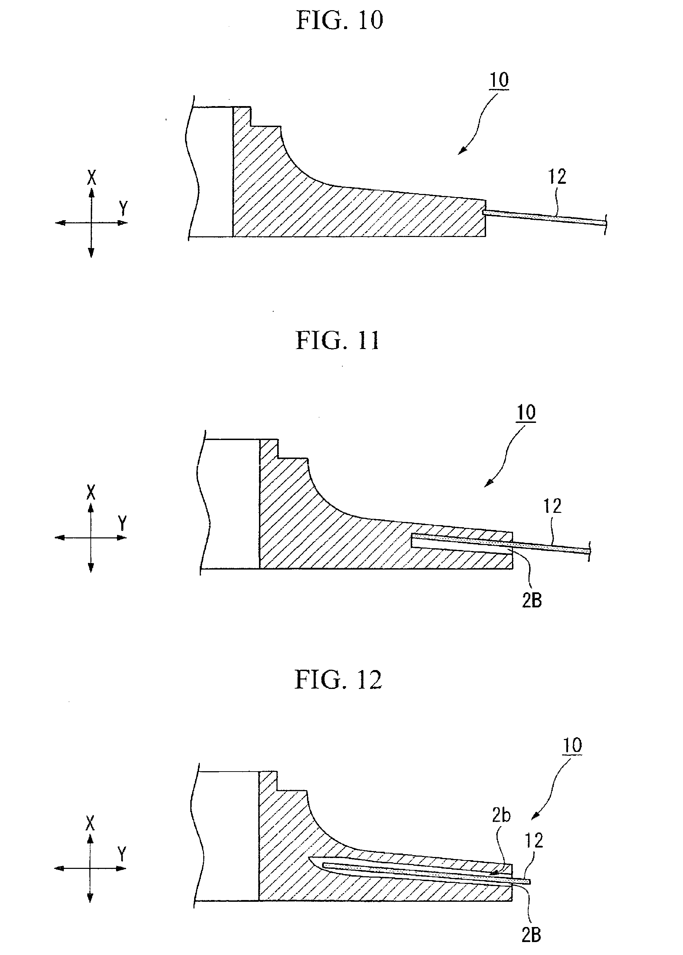

Next, a method of manufacturing the above-described impeller 1 will be described with reference to FIGS. 3 to 23. As shown in FIG. 3, the method of manufacturing the impeller 1 according to the present embodiment includes an external shape forming step (S1), an outer peripheral side passageway forming step (S2), an inner peripheral side passageway forming step (S3), an acid cleaning treatment step (S4), a polishing step (S5), and an external shape finishing step (S6). In addition, the inner peripheral side passageway forming step (S3) is a first passageway forming step according to the present invention, and the outer peripheral side passageway forming step (S2) is a second passageway forming step according to the present invention. Hereinafter, the processes will be described in detail.

### [External Shape Forming Step]

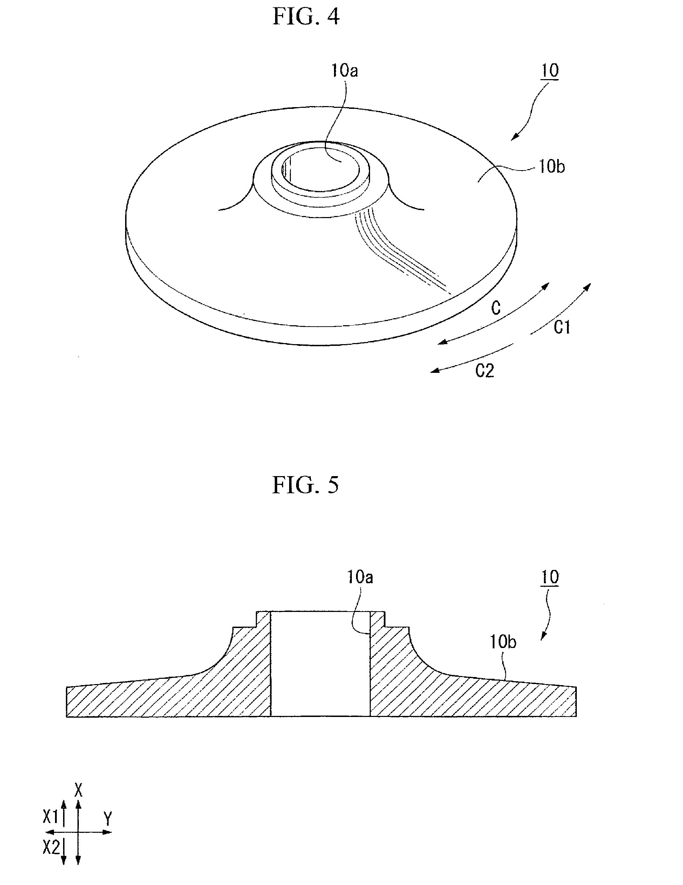

First, the external shape forming step of forming a disk 10 forming the external shape of the impeller 1 shown in FIGS. 4 and 5 is performed (S1).

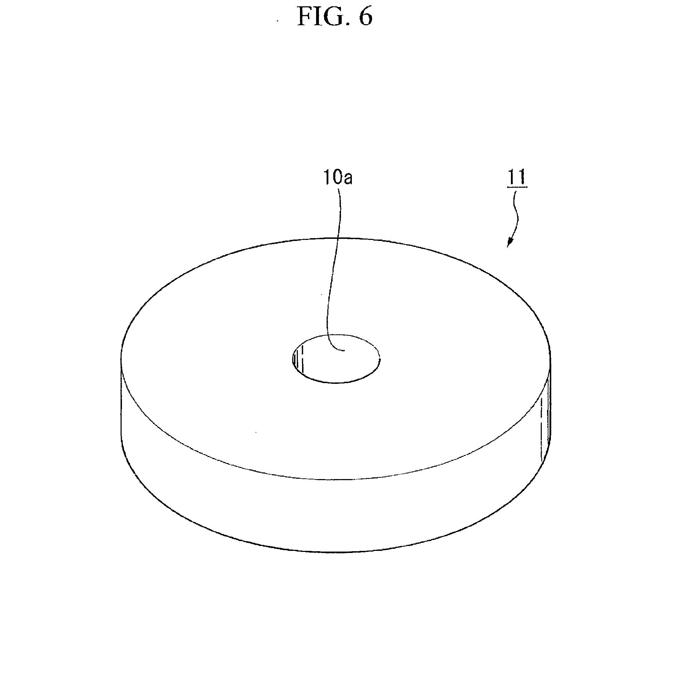

That is, as shown in FIG. 6, first, a base material 11 having an insertion hole 10a formed at the center portion thereof so as to allow a rotary shaft (not shown) to be inserted therethrough is forged. Then, as shown in FIG. 5, a slope surface 10b which is the front surface as the surface on one side X1 of the axial direction X of the shroud 5 is formed by, for example, lathe machining so as to be gently inclined toward the other side X2 in the axial direction X as it goes from the inner peripheral side to the outer peripheral side, thereby forming the disk 10.

In addition, here, an example is described in which the disk 10 is formed in such a manner that the base material 11 is processed by lathe machining or the like, but the disk 10 may be formed by forging. Further, here, an example is described in which the cylindrical base material 11 having the insertion hole 10a formed by forging is adopted, but the insertion hole 10a may be formed in such a manner that the disk-shaped base material is processed by lathe machining or the like.

### [Outer Peripheral Side Passageway Forming Step]

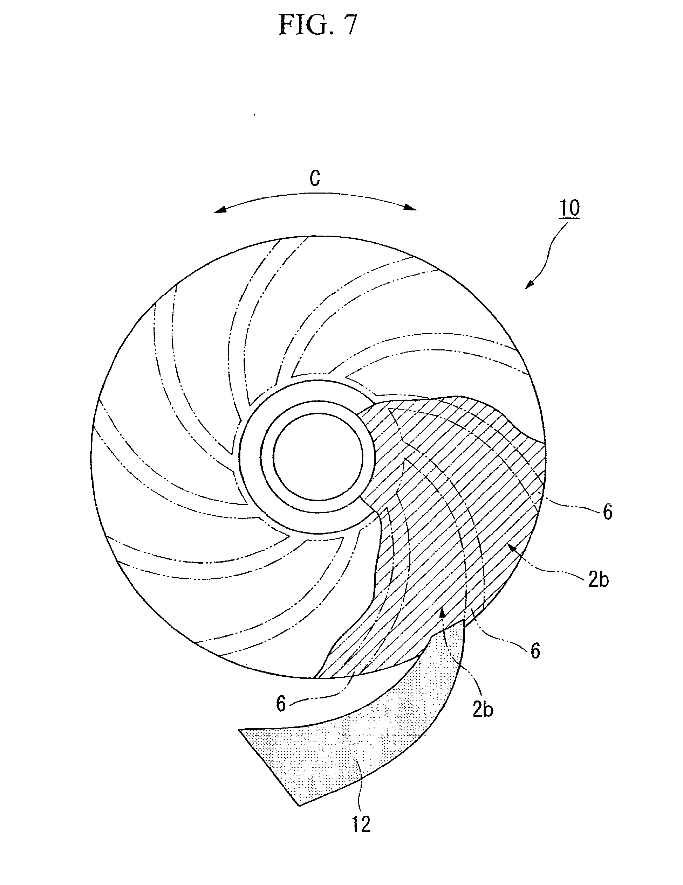

Subsequently, as shown in FIGS. 7 to 14, the outer peripheral side passageway forming step of forming the linear portion 2b of the passageway 2 in the outer peripheral side of the disk 10 is performed (S2). In the present embodiment, the outer peripheral side passageway forming step is performed in such a manner that an outer peripheral side electrode 12 corresponding to the shape of the linear portion 2b is inserted from the outer peripheral end 2B of the passageway 2 by electrical discharge machining.

Here, the outer peripheral side electrode 12 is described. As shown in FIGS. 7 to 12, the outer peripheral side electrode 12 is a thin and long member which is substantially formed in a rectangular shape in a sectional view. In addition, the outer peripheral side electrode 12 has a linear shape corresponding to the shape of the linear portion 2b of the passageway 2 when seen from the circumferential direction C. The outer peripheral side electrode 12 has a shape having a height lower than that of the linear portion 2b, and has a width and a curved shape corresponding to the shape when seen from the axial direction X. Further, the outer peripheral side electrode 12 is formed from, for example, graphite or copper, and is attached to an electric discharge machine (not shown).

The outer peripheral side passageway forming step using the above-described outer peripheral side electrode 12 will be described. First, the disk 10 is immersed into, for example, electrical discharge oil (not shown).

Subsequently, as shown in FIGS. 7 to 12, the disk 10 and the passageway 2 are moved relative to the radial direction Y and the circumferential direction C and are moved in the axial direction X if necessary so that the outer peripheral side electrode 12 processes a portion to be the linear portion 2b of the passageway 2 in the disk 10, and electrical discharge machining is performed by using the outer peripheral side electrode 12. In addition, at this time, the electrical discharge machining may be performed by appropriately changing the electrical discharge machining condition (a current, a voltage, a pulse, and a transfer speed) of the outer peripheral side electrode 12.

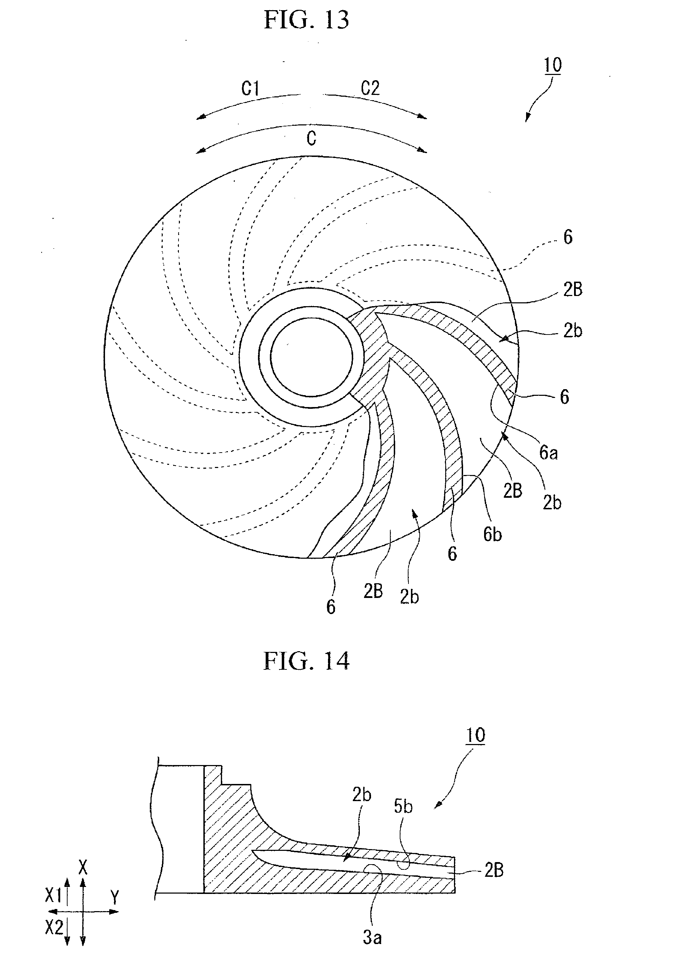

When the above-described outer peripheral side passageway forming step is repeatedly performed for each passageway 2 formed in the impeller 1, as shown in FIGS. 13 and 14, the outer peripheral side passageway forming step ends, and the linear portion 2b of each passageway 2 is formed.

In addition, in the above-described outer peripheral side passageway forming step, an example is described in which the linear portion 2b of the passageway 2 is formed by using one type of outer peripheral side electrode 12, but the present invention is not limited thereto. For example, the linear portion 2b may be formed by using plural types of electrodes having different sizes or materials in an order of rough processing, middle processing, and finish processing.

### [Inner Peripheral Side Passageway Forming Step]

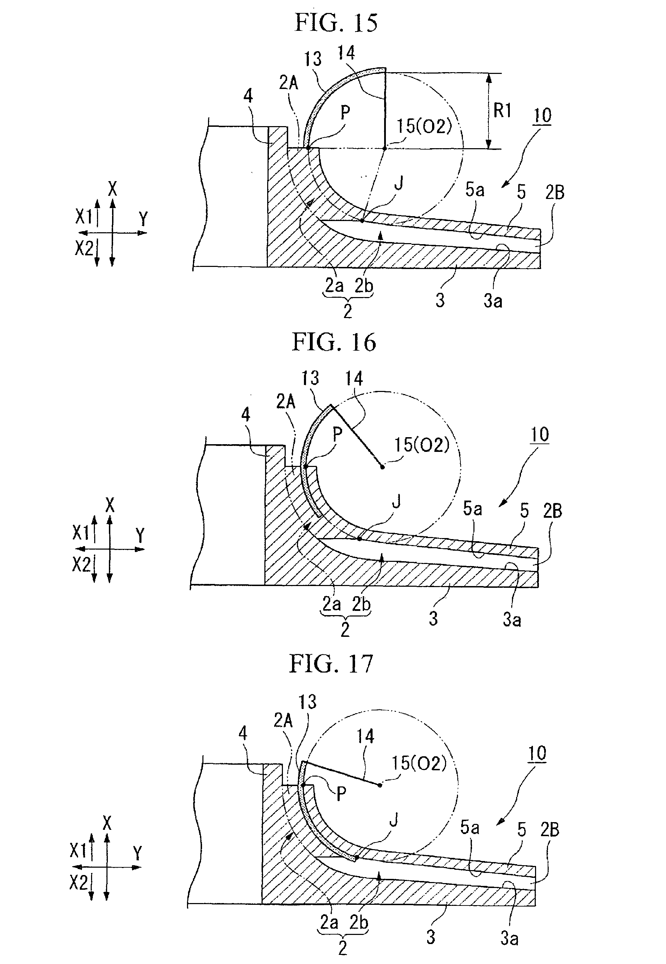

Subsequently, as shown in FIGS. 15 to 21, the inner peripheral side passageway forming step of forming the curved portion 2a of the passageway 2 from a position which is the inner peripheral end 2A of the passageway 2 toward the outer peripheral side is performed (S3). In the present embodiment, the inner peripheral side passageway forming step is performed in such a manner that an inner peripheral side electrode (processing tool) 13 corresponding to the shape of the curved portion 2a is inserted from the inner peripheral end 2A of the passageway 2.

First, the inner peripheral side electrode 13 will be described in detail. The inner peripheral side electrode 13 is formed from, for example, graphite or copper as in the outer peripheral side electrode 12. In addition, as shown in FIGS. 15 to 17, the inner peripheral side electrode 13 is a thin and long member which is substantially formed in a rectangular shape in a sectional view, and is formed to have a curved shape corresponding to the curved portion 2a of the passageway 2.

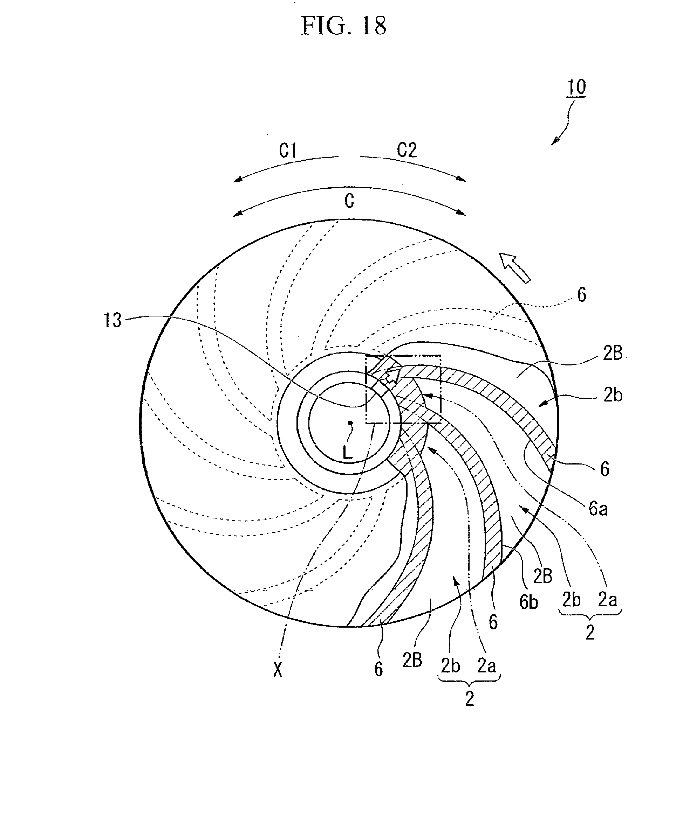

In detail, the inner peripheral side electrode 13 has a curved shape in a direction corresponding to the shape of the curved portion 2a when seen in the circumferential direction C. In the present embodiment, the curvature radius of the inner peripheral side electrode 13 is set to be substantially equal to the curvature radius R1 when seen from the circumferential direction C of the curved portion 2a, and the height thereof is set to be shorter than that of the curved portion 2a. In addition, as shown in FIG. 18, the inner peripheral side electrode 13 has a curved shape in a direction corresponding to the shape in the axial direction X of the curved portion 2a. In the present embodiment, the width of the inner peripheral side electrode 13 is set to be substantially equal to the width of the curved portion 2a at the inner peripheral end 2A.

In addition, in the present embodiment, as shown in FIGS. 15 to 17, the length of the inner peripheral side electrode 13 is set to be larger than that of the curved portion 2a.

In addition, the base end of the inner peripheral side electrode 13 is supported by an electrical discharge machine (not shown) including a rotary mechanism having a telescopic arm 14 so as to rotate about a rotation center 15. Accordingly, since the inner peripheral side electrode 13 is able to rotate about the rotation center 15, the inner peripheral side electrode 13 is able to move relative to the disk 10 while having a substantially circular-arc locus.

In addition, the inner peripheral side passageway foaming step using the above-described inner peripheral side electrode 13 is performed.

First, the disk 10 is immersed into, for example, electrical discharge oil (not shown).

Subsequently, as shown in FIG. 15, the rotation center 15 of the inner peripheral side electrode 13 is set at a position on one side X1 of the axial direction X where the curvature centers O1 and O2 of the curved portion 2a of the passageway 2 are located relative to the disk 10. In the present embodiment, first, the rotation center 15 is aligned to the curvature center 02 so as to process the inner portion of the curved portion 2a. In addition, the length of the arm 14 is set to be substantially equal to the curvature radius R1 of the passageway 2. As a method of setting the rotation center 15 at this time, for example, a method may be exemplified which obtains an intersection point of a normal line from an inner peripheral end P of the inner stream surface 5a and a connection portion J connecting a portion of the inner stream surface 5a forming the linear portion 2b to a portion thereof forming the curved portion 2a. In addition, the method of setting the rotation center 15 is not limited thereto.

Subsequently, as shown in FIGS. 15 to 17, when the inner peripheral side electrode 13 is rotated about the rotation center 15, the inner peripheral side electrode 13 is inserted from the inner peripheral end 2A of the passageway 2, and the curved portion 2a of the passageway 2 is formed from a position which is the inner peripheral end 2A of the passageway 2 toward the outer peripheral side by electrical discharge machining. Accordingly, as it goes from a position which is the inner peripheral end 2A of the passageway 2 in the disk 10 to the outer peripheral side, the inner peripheral side electrode 13 is moved relative to the disk 10 while having a curve locus following the radial direction Y. Here, since the rotation center 15 is equal to the curvature center 02, and the length of the arm 14 is substantially equal to the curvature radius R1, the inner peripheral side electrode 13 is moved along the inner stream surface 5a forming the curved portion 2a, thereby forming the inner portion of the curved portion 2a. In the present embodiment, since the length of the inner peripheral side electrode 13 is longer than that of the curved portion 2a, it is possible to reliably form the inner portion of the curved portion 2a with high precision.

In addition, in the present embodiment, as described above, when the inner peripheral side electrode 13 is rotated about the rotation center 15, as shown in FIG 18, the curved portion 2a of the passageway 2 is formed in the disk 10 while relatively moving the rotation center 15 and the disk 10 in the circumferential direction C together with the rotation.

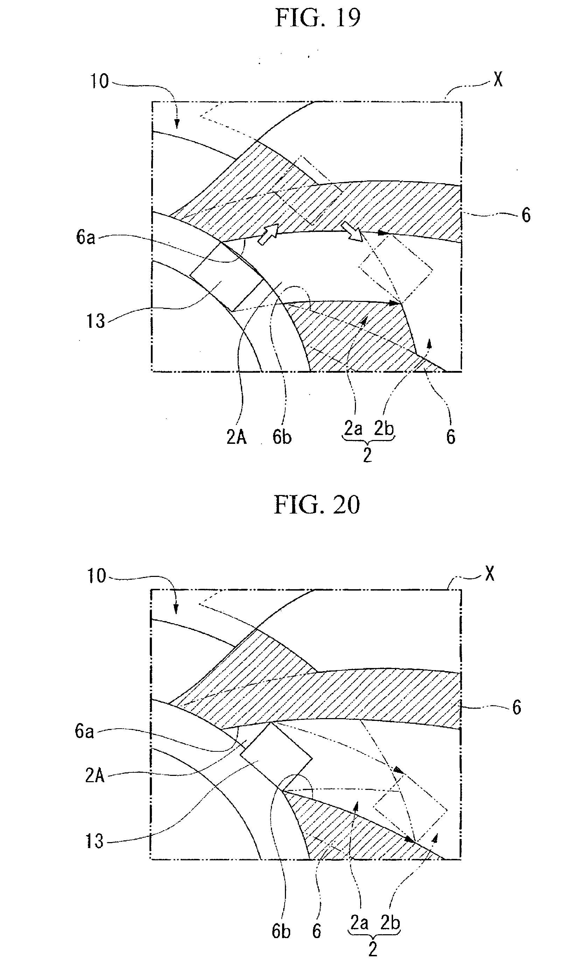

In detail, as shown in FIG 18, as described above, when the inner peripheral side electrode 13 is rotated about the rotation center 15 so as to move relative to the disk 10 from the inner peripheral side to the outer peripheral side, the disk 10 is rotated about the axis L serving as the center toward one side C1 in the circumferential direction C. Accordingly, as shown in FIG. 19, it is possible to move the inner peripheral side electrode 13 relative to the disk 10 while having a locus curved toward one side C1 in the circumferential direction C as it goes from a position which is the inner peripheral end 2A of the passageway 2 in the disk 10 to the outer peripheral side. Therefore, it is possible to easily and highly precisely form the curved portion 2a of the passageway 2 curved in the circumferential direction C as it goes from the inner peripheral side to the outer peripheral side.

In the example shown in FIG. 19, the first curved surface 6a is formed by rotating the disk 10 toward one side C1 in the circumferential direction C so that the inner peripheral side electrode 13 is moved along the first curved surface 6a. In addition, in the present embodiment, since the width of the passageway 2 is gradually widened as it goes from the inner peripheral side to the outer peripheral side, as shown in FIG. 20, the inner peripheral side electrode 13 is moved again toward the inner peripheral end 2A of the passageway 2 after the first curved surface 6a is formed. Further, the second curved surface 6b is formed by rotating the inner peripheral side electrode 13 about the rotation center 15 and rotating the disk 10 about the axis L toward one side C1 in the circumferential direction C so that the inner peripheral side electrode 13 is moved along the second curved surface 6b.

As described above, it is possible to form the inner portion of the curved portion 2a of the passageway 2 throughout the circumferential direction C of the passageway 2 so as to be curved toward one side C1 in the circumferential direction C as it goes from the inner peripheral side to the outer peripheral side.

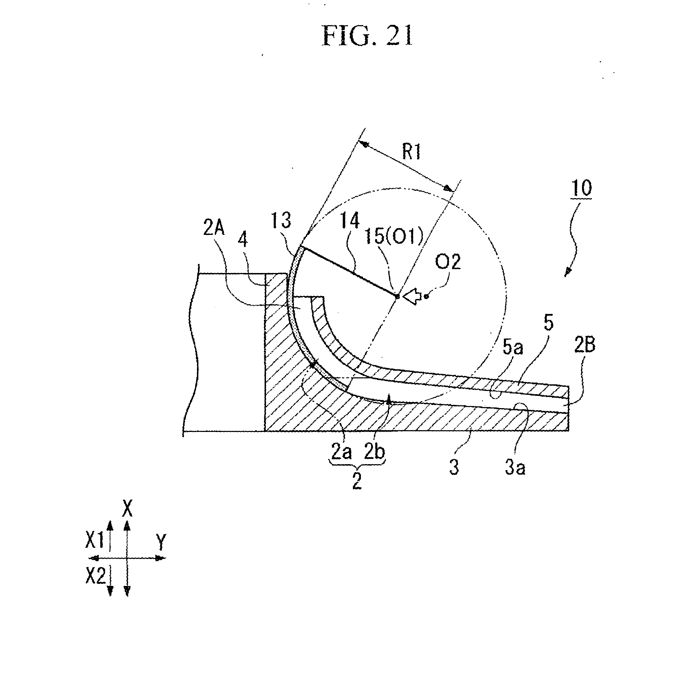

Subsequently, as shown in FIG. 21, the rotation center 15 of the inner peripheral side electrode 13 is gradually moved to the curvature center O1 in the inner peripheral side, and the above-described electrical discharge machining is repeatedly performed so as to gradually form the outer portion of the curved portion 2a by using the inner peripheral side electrode 13. Accordingly, it is possible to form the curved portion 2a of the passageway 2. In addition, in this step, the electrical discharge machining condition (a current, a voltage, a pulse, and a transfer speed) of the inner peripheral side electrode 13 may be appropriately changed.

When the above-described inner peripheral side passageway forming step is repeatedly performed for each passageway 2 formed in the impeller 1, the inner peripheral side passageway forming step ends.

### [Acid cleaning Treatment Step]

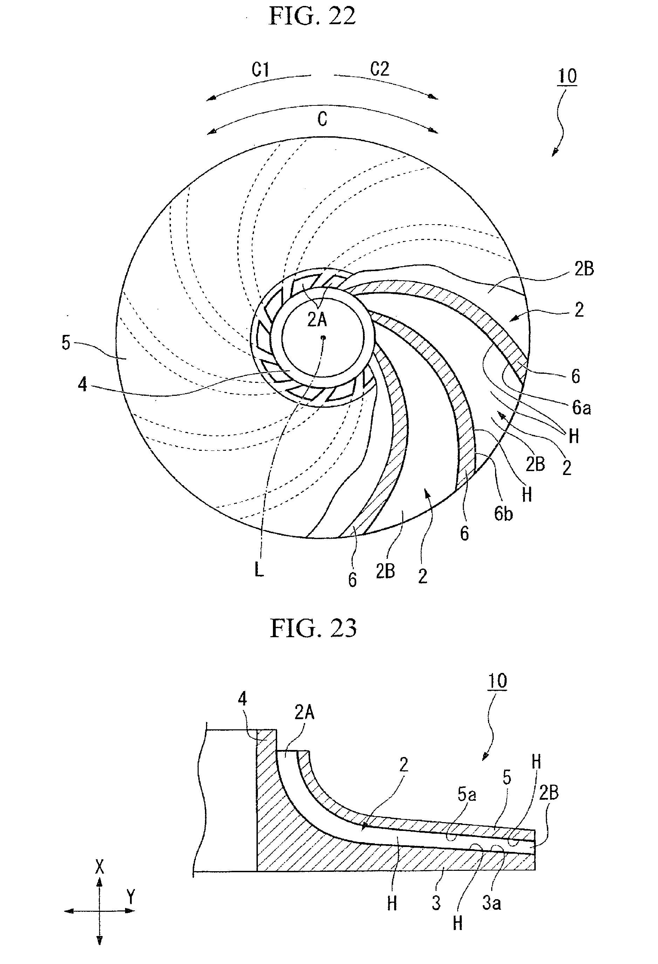

Subsequently, the acid cleaning step of acid cleaning the disk 10 by immersing the disk 10 into a liquid layer in which an acid cleaning solution containing, for example, hydrochloric acid or sulphuric acid is maintained at a predetermined temperature (S4). Accordingly, as shown in FIGS. 22 and 23, it is possible to remove an altered layer H formed on the first curved surface 6a, the second curved surface 6b, the outer stream surface 3a, and the inner stream surface 5a formed by, for example, electrical discharge machining.

Since the altered layer H contains a large amount of carbons and is harder than metal forming the disk 10, the altered layer H easily splits, which causes deterioration in the fatigue characteristics of the metal. In addition, since the surface roughness of the altered layer H is rough so as to be equal to or more than 10 µm and equal to or less than 50 µm, the surface roughness serves as a resistance when the air k flows inside the passageway 2, which causes deterioration in the compression efficiency of the centrifugal compressor. Accordingly, it is possible to improve the fatigue characteristics of the metal by removing the altered layer H through the acid cleaning treatment in this step.

### [Polishing Step]

Subsequently, the polishing step of smoothening the first curved surface 6a, the second curved surface 6b, the outer stream surface 3a, and the inner stream surface 5a forming the passageway 2 by polishing the respective surfaces is performed (S5). At this time, the polishing is performed by, for example, fluid polishing or electropolishing. In addition, in the case where the polishing is performed by fluid polishing, the polishing is performed by using a medium (polishing clayey materials mixed with polishing particles) flowing into the passageway 2 in a high pressure state. Further, in the case where the polishing is performed by electropolishing, metal of the respective surfaces of the passageway 2 is melted and polished in such a manner that electric conduction is performed by using, for example, a graphite electrode in the state where the impeller 1 is set to plus and the graphite electrode is set to minus in an electrolytic solution.

### [External Shape Finishing step]

Subsequently, the external shape finishing step of finishing the external shape by, for example, machining is performed so that the dimension of the disk 10 is equal to the default of the impeller 1 (S6).

When the external shape forming step (S1) to the external shape finishing step (S6) are performed as described above, it is possible to manufacture the impeller 1 shown in FIGS. 1 and 2.

According to the above-described method of manufacturing the impeller 1 of the centrifugal compressor, the rotation center 15 is set at a position on one side X1 of the axial direction X where the curvature center of the passageway 2 is located relative to the disk 10, and the inner peripheral side electrode 13 is rotated about the rotation center 15 relative to the disk 10. Accordingly, the inner peripheral side electrode 13 is moved relative to the disk 10 while having a curve locus following the radial direction Y as it goes from a position which is the inner peripheral end 2A of the passageway 2 in the disk 10 to the outer peripheral side. For this reason, it is possible to easily and highly precisely form the passageway 2 following the axial direction X in the inner peripheral side and following the radial direction Y in the outer peripheral side, and particularly, the curved portion 2a as the curved portion in the inner peripheral side in accordance with the curvature radius determined by the relative position between the set rotation center 15 and the disk 10.

In addition, since both the inner peripheral side passageway forming step and the outer peripheral side passageway forming step are provided, only the curved portion 2a of the passageway 2 may be formed in the inner peripheral side passageway forming step, and only the linear portion 2b of the passageway 2 may be formed in the outer peripheral side passageway forming step. Accordingly, it is possible to make the processing length in each passageway forming step to be short. For this reason, it is possible to more easily form the passageway 2 in each passageway forming step, and to more highly precisely form the entire passageway 2.

Further, since the inner peripheral side passageway forming step and the outer peripheral side passageway forming step are respectively performed by inserting the electrodes from the inner peripheral end 2A and the outer peripheral end 2B of the passageway 2, it is possible to more precisely form the passageway 2.

According to the above-described impeller 1 of the centrifugal compressor, the passageway 2 is formed such that the curved portion 2a is curved from the inner peripheral end 2A toward the outer peripheral side, and the inner peripheral end 2A is not provided with a linear portion. For this reason, it is possible to easily process the passageway 2 in such a manner that the rotation center 15 is set at a position on one side X1 of the axial direction X where the curvature center of the passageway 2 relative to the disk 10 as the base material of the impeller 1 is located, the inner peripheral side electrode 13 is rotated about the rotation center 15 relative to the disk 10, and then the inner peripheral side electrode 13 is just inserted from a position which is the inner peripheral end 2A of the passageway 2.

In addition, it is possible to highly precisely form the passageway in accordance with the curvature radius determined by the relative position between the disk 10 and the rotation center 15 set at this time.

Further, in the present embodiment, an example is described in which the outer stream surface 3a and the inner stream surface 5a forming the curved portion 2a of the passageway 2 have the same curvature radius R1, but the present invention is not limited thereto. For example, the outer stream surface 3a and the inner stream surface 5a may have different curvatures. In addition, in this case, the curvatures thereof may have the same curvature center.

### [Second Embodiment]

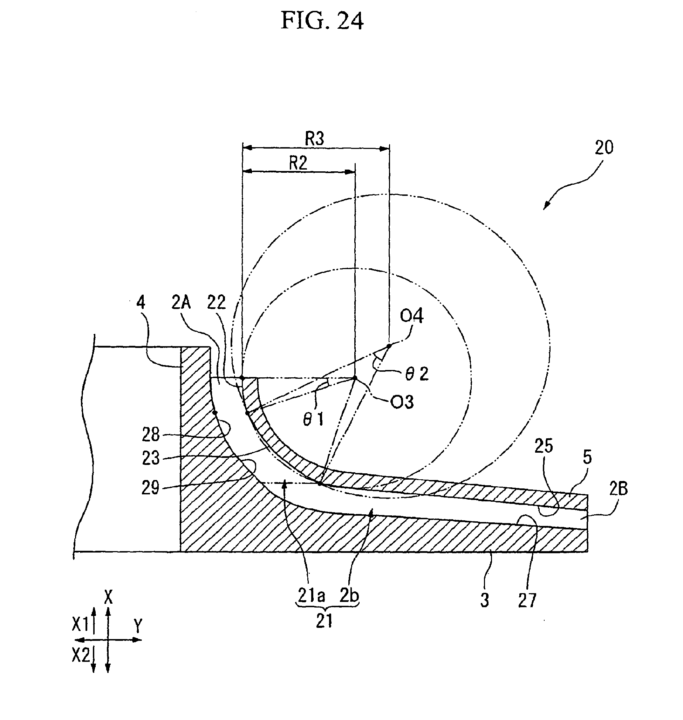

Next, an impeller 20 of the centrifugal compressor according to a second embodiment of the present invention will be described with reference to FIG. 24.

In addition, in the second embodiment, since the same reference numerals will be given to the same constituents as those of the first embodiment, the description thereof will be omitted, and only the points of diference will be described.

As shown in FIG. 24, in the impeller 20 according to the present embodiment, a curved portion 21a of a passageway 21 is formed in a curved shape having plural curvatures.

In the example shown in FIG. 24, a part of an inner stream surface 25 forming the inner portion of the curved portion 21a is formed in such a manner that an inner peripheral side curved surface 22 having a curvature radius R2 about a curvature center 03 set at a position on one side X1 of the axial direction X of the impeller 20 and an outer peripheral side curved surface 23 having a curvature radius R3 about a curvature center 04 set at a position on one side X1 of the axial direction X of the impeller 20 are connected to each other in an order from the inner peripheral side to the outer peripheral side. The inner peripheral side curved surface 22 is formed to have a length along an angle θ1 about the curvature center 03, and the outer peripheral side curved surface 23 is formed to have a length along an angle θ2 about the curvature center 04.

In the example shown in FIG 24, a part of an outer stream surface 27 forming the outer portion of the curved portion 21a is formed in such a manner that an inner peripheral side curved surface 28 having a curvature radius R2 about a curvature center 05 (not shown) set at a position on one side X1 of the axial direction X of the impeller 20 and an outer peripheral side curved surface 29 having a curvature radius R3 having a curvature center 06 (not shown) set at a position on one side X1 of the axial direction X of the impeller 20 are connected to each other in an order of the inner peripheral side to the outer peripheral side.

Since the inner stream surface 25 and the outer stream surface 27 are formed as described above, the curved portion 21 a of the passageway 21 is formed in a curved shape having plural curvatures.

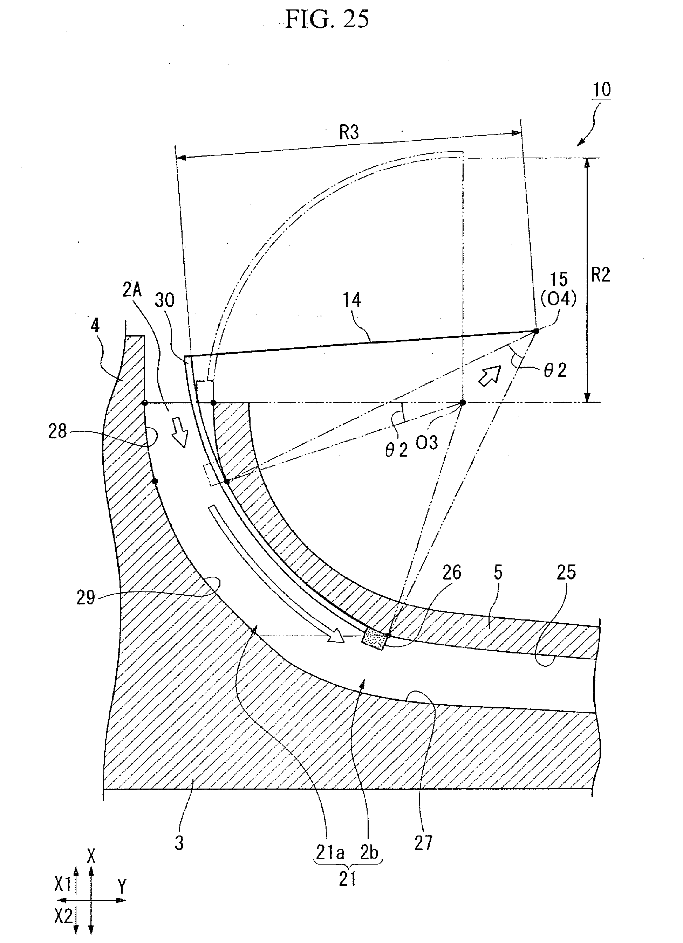

Next, the inner peripheral side passageway forming step in the method of manufacturing the above-described impeller 20 will be described with reference to FIG. 25.

Here, an inner peripheral side electrode 26 used in the inner peripheral side passageway forming step according to the present embodiment will be described. As shown in FIG. 25, the inner peripheral side electrode 26 is substantially formed in a rectangular shape in a sectional view. In addition, the length of the inner peripheral side electrode 26 is set to be shorter than that of the inner peripheral side curved surface 22 of the inner stream surface 25.

Further, the inner peripheral side electrode 26 and the arm 14 are connected to each other through an intermediate member 30 having a curved shape in a sectional view. The length of the intermediate member 30 is longer than that of the curved portion 21a, and the curvature radius thereof is substantially equal to the curvature radius R3.

The case of forming the inner portion of the curved portion 21 a in the inner peripheral side passageway forming step according to the present embodiment using the above-described inner peripheral side electrode 26 will be described. The disk 10 is immersed into, for example, electrical discharge oil (not shown), and the rotation center 15 of the inner peripheral side electrode 26 is set at a position on one side X1 of the axial direction X relative to the disk 10. At this time, the rotation center 15 is set to be equal to the curvature center 03 of the inner peripheral side curved surface 22 of the inner stream surface 25. In addition, as depicted by the two-dot chain line in FIG. 25, the length of the arm 14 is set to the curvature radius R2 and the position (inclination) of the arm 14 about the rotation center 15 is set so that the inner peripheral side electrode 26 connected to the arm 14 through the intermediate member 30 comes into contact with a portion to be provided with the inner peripheral end 2A of the passageway 21 in the disk 10.

In addition, the position of the rotation center 15 is changed in accordance with the rotation angle about the rotation center 15 of the inner peripheral side electrode 26 relative to the disk 10 so that the inner peripheral side electrode 26 is rotated about the rotation center 15 relative to the disk 10.

In detail, first, the inner peripheral side electrode 26 is rotated about the rotation center 15 by the rotation angle θ1 from a position which is the inner peripheral end 2A of the of the passageway 21 in the disk 10 toward the outer peripheral side so that the inner peripheral side electrode 26 is moved to the middle position inside the curved portion 21a, thereby forming a range formed by the inner peripheral side curved surface 22 in the inner portion of the curved portion 21a. Subsequently, the position of the rotation center 15 is changed from the curvature center 03 of the inner peripheral side curved surface 22 to the curvature center 04 of the outer peripheral side curved surface 23, and the length of the arm 14 is set to the curvature radius R3. In addition, the inner peripheral side electrode 26 is rotated about the rotation center 15 located at the curvature center 04 by the rotation angle θ2 from the middle position to the outer peripheral side so that the inner peripheral side electrode 26 is moved to a position which is the outer peripheral end of the curved portion 21a, thereby forming a range formed by the outer peripheral side curved surface 23 in the inner portion of the curved portion 21a.

According to the above-described method of manufacturing the impeller 20, in the inner peripheral side passageway forming step, since the inner peripheral side electrode 26 is rotated about the rotation center 15 relative to the disk 10 while changing the position of the rotation center 15 in accordance with the rotation angle about the rotation center 15, it is possible to form the passageway 21 formed in a curved shape having plural curvatures.

In addition, in the present embodiment, the rotation of the inner peripheral side electrode 26 about the rotation center 15 and the position change of the rotation center 15 are performed at different timings, but may be performed at the same timing in accordance with the shape of the inner stream surface 25. In this case, it is possible to form the passageway of which the curvature radius continuously changes.

Further, the technical scope of the present invention is not limited to the above-described embodiments, and various modifications can be made without departing from the spirit or scope of the present invention.

For example, in the above-described embodiments, an example is described in which the outer peripheral side passageway forming step is performed, but the outer peripheral side passageway forming step maybe omitted by forming all regions from the inner peripheral end 2A to the outer peripheral end 2B of the passageway 2 or 21 in the inner peripheral side passageway forming step. In addition, in the above-described embodiments, an example is described in which the inner peripheral side passageway forming step is performed after the outer peripheral side passageway forming step, but the sequence is not limited thereto.

In the above-described embodiments, an example is described in which the inner peripheral side passageway forming step and the outer peripheral side passageway forming step are performed by electrical discharge machining, but the present invention is not limited thereto. For example, the inner peripheral side passageway forming step and the outer peripheral side passageway forming step may be performed by electrochemical machining or mechanical machining.

In the above-described embodiments, an example is described in which the acid cleaning treatment step and the polishing step are performed, but the present invention is not limited thereto. For example, in the case where the influence of the altered layer H is small, only the polishing step may be performed by skipping the acid cleaning treatment step. In the case where the surface roughness is small, the polishing step may be omitted.

In the above-described embodiments, an example is described in which the inner peripheral side electrode 13 or 26 is rotated relative to the disk 10 by rotating the inner peripheral side electrode 13 or 26 about the rotation center 15, but when the inner peripheral side electrode 13 or 26 and the disk 10 are rotated relative to each other, the present invention is not limited thereto. For example, the disk 10 may be rotated relative to the inner peripheral side electrode 13 or 26.

In the above-described embodiments, an example is described in which the passageway 2 or 21 is formed in the disk 10 in such a manner that the inner peripheral side electrode 13 or 26 is rotated about the rotation center 15, and the rotation center 15 and the disk 10 are moved relative to the circumferential direction C, but the present invention is not limited thereto. For example, the curved portion 2a or 21 a may be formed by changing the insertion position and the insertion direction of the inner peripheral side electrode 13 or 26 in accordance with the shape of the curved portion 2a or 21a in the radial direction Y without relatively moving the rotation center 15 and the disk 10 in the circumferential direction C. In addition, in the case where the curved portion 2a or 21a is not curved in the circumferential direction C along the radial direction Y, the rotation center 15 and the disk 10 may not be moved relative to the circumferential direction C.

In the above-described embodiments, an example is described in which the disk 10 is moved while being rotated about the axis L in the circumferential direction C upon relatively moving the rotation center 15 and the disk 10 in the circumferential direction C, but when the rotation center 15 and the disk 10 move relative to the circumferential direction C, the present invention is not limited thereto. For example, the rotation center 15 may be rotated about the axis L along the circumferential direction C relative to the disk 10.

In addition, the constituents of the above-described embodiments may be appropriately substituted by the known constituents within the scope not departing from the spirit of the present invention, and the modified example may be appropriately combined.

While preferred embodiments of the present invention have been described and illustrated above, it should be understood that these are exemplary examples of the present invention. Accordingly, the present invention is not to be considered as being limited by the foregoing description, and is only limited by the scope of the appended claims.

## Claims

1. A method of manufacturing an impeller (1) of a centrifugal rotary machine, the impeller (1) being formed in a substantially disk shape and including a passageway (2), which is formed between a body portion (3), a shroud (5), and adjacent blades (6) and is curved to follow the axial direction in an inner peripheral side of the impeller (1) and to follow the radial direction as it goes to an outer peripheral side thereof, **characterized in that** the method comprises:
a first passageway forming step (S3) of setting a rotation center (15) at a position between a curvature center (01) of part of an outer stream surface (3a) of the passageway forming the outer portion of a curved portion (2a) and a curvature center (02) of part of an inner stream surface of the passageway (5a) forming the inner portion of the curved portion (2a) on one side (X1) of the axial direction (X) where a curvature center (O1, O2) of the passageway (2) is located relative to a disk (10) forming an external shape of the impeller (1),
and rotating a processing tool about the rotation center (15) relative to the disk (10) so as to form at least a part of the passageway (2) from a position which is an inner peripheral end of the passageway (2) of the disk (10) toward the outer peripheral side.

2. The method according to claim 1,
wherein in the first passageway forming step (S3), the passageway (2) is formed in the disk (10) by rotating the processing tool about the rotation center (15) relative to the disk (10) and relatively moving the rotation center (15) and the disk (10) in the circumferential direction of the disk (10).

3. The method according to claim 1 or 2,
wherein in the first passageway forming step (S3), the processing tool is rotated about the rotation center (15) relative to the disk (10) by changing a position of the rotation center (15) in accordance with a rotation angle about the rotation center (15).

4. The method according to any one of claims 1 to 3, further comprising:
a second passageway forming step (S2) of forming an outer peripheral end of the passageway (2) from the outer peripheral side of the disk (10).

5. The method according to any one of claims 1 to 4,
wherein in the first passageway forming step (S3), an electrode (13) having a shape corresponding to a shape of the inner peripheral end of the passageway (2) is used as the processing tool, and
the electrode (13) is inserted from the inner peripheral end of the passageway (2) through electrical discharge machining.

## Patentansprüche

1. Verfahren zum Herstellen eines Laufrads einer Zentrifugalrotationsmaschine, bei dem das Laufrad (1) in einer im Wesentlichen Scheibenform ausgebildet ist und einen Durchgang (2) aufweist, der zwischen einem Körperabschnitt (3), einer Abdeckung (5) und angrenzenden Blättern (6) ausgebildet ist und so gekrümmt ist, dass er der axialen Richtung in einer inneren Umfangsseite des Laufrads (1) folgt und der radialen Richtung folgt, wenn er zu einer äußeren Umfangsseite davon läuft, **dadurch gekennzeichnet, dass** das Verfahren aufweist:
einen Ausbildungsschritt eines ersten Durchgangs (S3) von Festlegen eines Rotationszentrums (15) an einer Position zwischen einem Krümmungszentrum (O1) eines Teils einer äußeren Strömungsoberfläche (3a) des Durchgangs, die den äußeren Abschnitt eines gekrümmten Abschnitts (2a) bildet, und einem Krümmungszentrum (02) eines Teils einer inneren Strömungsoberfläche des Durchgangs (5a), die den inneren Abschnitt des gekrümmten Abschnitts (2a) an einer Seite (X1) der axialen Richtung (X) bildet, wo ein Krümmungszentrum (O1, 02) des Durchgangs (2) relativ zu einer Scheibe (10) angeordnet ist, die eine Außenform des Laufrads (1) bildet,
und Rotieren eines Bearbeitungswerkzeugs um das Rotationszentrum (15) relativ zu der Scheibe (10), sodass zumindest ein Teil des Durchgangs (2) von einer Position, die ein inneres Umfangsende des Durchgangs (2) der Scheibe (10) ist, zu der äußeren Umfangsseite hin ausgebildet wird.

2. Verfahren nach Anspruch 1, bei dem in dem Ausbildungsschritt des ersten Durchgangs (S3) der Durchgang (2) in der Scheibe (10) durch Rotieren des Bearbeitungswerkzeugs um das Rotationszentrum (15) relativ zu der Scheibe (10) und durch eine Relativbewegung des Rotationszentrums (15) und der Scheibe (10) in die Umfangsrichtung der Scheibe (10) gebildet wird.

3. Verfahren nach Anspruch 1 oder 2,
bei dem in dem Ausbildungsschritt des ersten Durchgangs (S3) das Bearbeitungswerkzeug um das Rotationszentrum (15) relativ zu der Scheibe (10) durch Verändern einer Position des Rotationszentrums (15) in Übereinstimmung mit einem Rotationswinkel um das Rotationszentrum (15) rotiert wird.

4. Verfahren nach einem der Ansprüche 1 bis 3, ferner mit:
einem Ausbildungsschritt eines zweiten Durchgangs (S2) von Ausbilden eines äußeren Umfangsendes des Durchgangs (2) von der äußeren Umfangsseite der Scheibe (10).

5. Verfahren nach einem der Ansprüche 1 bis 4,
bei dem in dem Ausbildungsschritt des ersten Durchgangs (S3) eine Elektrode (13), die eine Form aufweist, die einer Form eines inneren Umfangsendes des Durchgangs (2) entspricht, als Bearbeitungswerkzeug verwendet wird und
die Elektrode (13) von dem inneren Umfangsende des Durchgangs (2) durch Elektroerodieren eingeführt wird.

## Revendications

1. Procédé de fabrication d'une turbine (1) pour une machine rotative centrifuge, la turbine (1) ayant essentiellement la forme d'un disque et comprenant un passage (2), qui est formé entre une partie de corps (3), une flasque (5), et des aubes adjacentes (6) et qui est incurvé pour suivre la direction axiale dans un côté périphérique interne de la turbine (1) et pour suivre la direction radiale comme il s'étend vers son côté périphérique externe, **caractérisé en ce que** le procédé comprend :
une première étape de formation de passage (S3) consistant à définir un centre de rotation (15) à une position entre un centre de courbure (O1) d'une partie d'une surface de flux externe (3a) du passage formant la partie externe d'une partie incurvée (2a) et un centre de courbure (02) d'une partie d'une surface de flux interne du passage (5a) formant la partie interne de la partie incurvée (2a) sur un côté (X1) de la direction axiale (X) où un centre de courbure (O1, O2) du passage (2) est situé par rapport à un disque (10) ayant une forme externe de la turbine (1),
et à mettre un outil de traitement en rotation autour du centre de rotation (15) par rapport au disque (10) de sorte à former au moins une partie du passage (2) depuis une position qui est une extrémité périphérique interne du passage (2) du disque (10) vers le côté périphérique externe.

2. Procédé selon la revendication 1,
dans lequel, dans la première étape de formation de passage (S3), le passage (2) est formé dans le disque (10) en mettant l'outil de traitement en rotation autour du centre de rotation (15) par rapport au disque (10) et en déplaçant relativement le centre de rotation (15) et le disque (10) dans la direction circonférentielle du disque (10).

3. Procédé selon la revendication 1 ou 2,
dans lequel, dans la première étape de formation de passage (S3), l'outil de traitement est mis en rotation autour du centre de rotation (15) par rapport au disque (10) en changeant la position du centre de rotation (15) conformément à un angle de rotation autour du centre de rotation (15).

4. Procédé selon l'une quelconque des revendications 1 à 3, comprenant en outré :
une deuxième étape de formation de passage (S2) pour former une extrémité périphérique externe du passage (2) à partir du côté périphérique externe du disque (10).

5. Procédé selon l'une quelconque des revendications 1 à 4,
dans lequel, dans la première étape de formation de passage (S3), une électrode (13) ayant une forme correspondant à la forme de l'extrémité périphérique interne du passage (2) est utilisée comme outil de traitement, et
l'électrode (13) est insérée depuis l'extrémité périphérique interne du passage (2) par usinage par électroérosion.
